# EUROPEAN PATENT APPLICATION

(11) **EP 3 018 970 A1**
(43) Date of publication of application: **11.05.2016**
(21) Application number: 15193464.3
(22) Date of filing: 06.11.2015
(51) Int. Cl.: H04W 76/04, H04W 76/02, H04W 8/00

(54) **DEVICE AND METHOD OF HANDLING PROXIMITY SERVICE**

(30) Priority: 07.11.2014 US 201462076496 P
(71) Applicant: HTC Corporation, Taoyuan City 330 (TW)
(72) Inventor: Chen, Te-Ming, 330, Taoyuan District, Taoyuan City (TW)
(74) Representative: Wagner, Karl H.

(57) **Abstract**

A communication device for handling Proximity Service (ProSe) comprises a storage unit for storing instructions and a processing means coupled to the storage unit. The processing means is configured to execute the instructions stored in the storage unit. The instructions may comprise determining to keep a first ProSe operation and to enable (disable) a second ProSe operation of a plurality of ProSe operations after enabling the first (and the second) ProSe operations, and transmitting a message comprising a first field and (not) comprising a second field of a plurality of fields to a network according to the determination, wherein the first and the second fields correspond to the first and the second ProSe operations, respectively.

## Description

### Background of the Invention

### 1. Field of the Invention

The present invention is related a communication device and a method used in a wireless communication system, and more particularly, to a communication device and a method of handling a Proximity Service in a wireless communication system.

### 2. Description of the Prior Art

A long-term evolution (LTE) system supporting the 3rd Generation Partnership Project (3GPP) Rel-8 standard and/or the 3GPP Rel-9 standard are developed by the 3GPP as a successor of the universal mobile telecommunication system (UMTS) for further enhancing performance of the UMTS to satisfy increasing needs of users. The LTE system includes a new radio interface and a new radio network architecture that provides high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and for communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint (CoMP) transmissions/reception, uplink (UL) multiple-input multiple-output (UL-MIMO), etc. For a UE and an eNB to communicate with each other in the LTE-A system, the UE and the eNB must support standards developed for the LTE-A system, such as the 3GPP Rel-10 standard or later versions.

Among the LTE-A communication techniques, a device-to-device communication (D2D) (e.g., Proximity Service (ProSe)) has the advantages of reducing network traffic loading, improving energy efficiency, throughput, etc. The D2D may enable the UE to directly communicate with other UEs which are spatially close to it. The UE may transmit a fist message which includes one or more fields to the eNB to indicate that the UE intends to enable corresponding ProSe operation(s).

For example, the UE may have two active ProSe operations (e. g. , ProSe1 and ProSe2) corresponding to two fields (e.g., field1 and field2), respectively. After a while, the UE may determine to stop one (e.g., ProSe1) and to keep the other one (e.g., ProSe2) of the ProSe operations, and may transmit a message to indicate the determination to the eNB. According to the currently developed 3GPP standard, if the message is for disabling the ProSe operation ProSe1, it doesn't include the field field1. Further, the UE only includes a field corresponding to a ProSe operation in the message when it wants to enable the ProSe operation. Since the ProSe operation ProSe2 is already active, the message doesn't include the field field2. Thus, the UE may transmit the message without including the fields field1 and field2 to the eNB. The eNB may disable both of the ProSe operations ProSe1 and ProSe2 after receiving the message. That is, the eNB misunderstands the determination of the UE, and performs improper operations according to the message.

For example, the UE may have an active ProSe operation (e.g., ProSe1) corresponding to a field (e.g., field1). After a while, the UE may determine to start another ProSe operation (e.g., ProSe2) and to keep the original ProSe operation (e.g., ProSe1), and may transmit a message to indicate the determination to the eNB. According to the currently developed 3GPP standard, the UE only includes a field corresponding to a ProSe operation in the message when it wants to enable the ProSe operation. Since the ProSe operation ProSe1 is already active, the message doesn't include the field field1. Thus, the UE may transmit the message without including the field field1 and only including the field field2 to the eNB. The eNB may disable the ProSe operation ProSe1 and enable the ProSe operation ProSe2 after receiving the message. That is, the eNB misunderstands the determination of the UE, and performs improper operations according to the message.

Thus, how to handle a message for enabling/disabling ProSe operations is an important topic to be discussed.

### Summary of the Invention

The present invention therefore provides a communication device and a method for handling Proximity Service to solve the abovementioned problem.

A communication device for handling Proximity Service (ProSe) comprises a storage unit for storing instructions and a processing means coupled to the storage unit. The processing means is configured to execute the instructions stored in the storage unit. The instructions comprise determining to keep a first ProSe operation and to enable a second ProSe operation of a plurality of ProSe operations after enabling the first ProSe operation; transmitting a message comprising a first field and a second field of a plurality of fields to a network according to the determination, wherein the first field and the second field correspond to the first ProSe
operation and the second ProSe operation, respectively.

The instructions may further comprise determining to keep the first ProSe operation and disable the second ProSe operation; and transmitting a message comprising the first field and not comprising the second field to the network according to the determination, wherein the first and the second fields correspond to the first and the second ProSe operations, respectively.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.

### Detailed Description

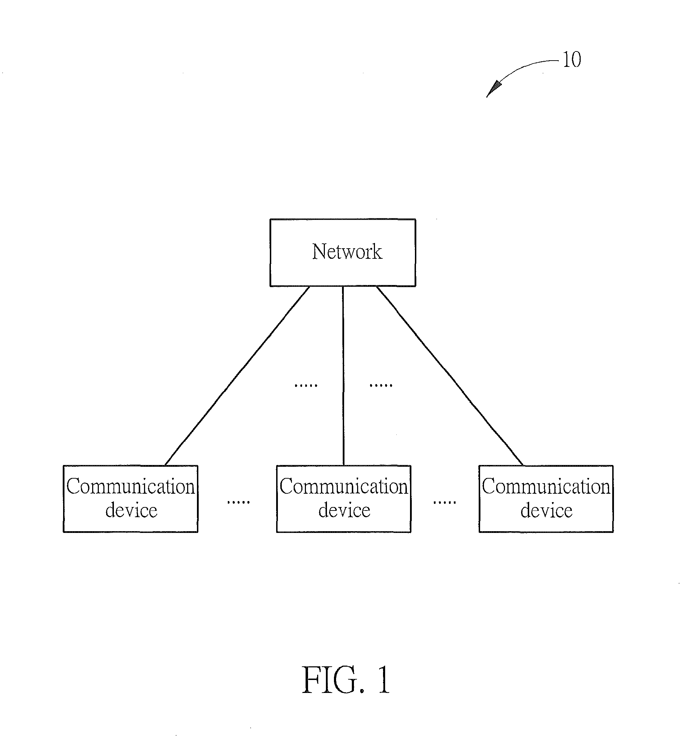

Fig. 1 is a schematic diagram of a wireless communication system 10 according to an example of the present invention. The wireless communication system 10 is briefly composed of a network and a plurality of communication devices. In Fig. 1, the network and the communication devices are simply utilized for illustrating the structure of the wireless communication system 10. The network and a communication device may communicate with each other via one or more licensed carrier(s) and/or unlicensed carrier(s). Practically, the network can be a universal terrestrial radio access network (UTRAN) comprising at least one Node-B (NB) in a universal mobile telecommunications system (UMTS). In another example, the network can be an evolved UTRAN (E-UTRAN) comprising at least one evolved NB (eNB) and/or at least one relay in a long term evolution (LTE) system, a LTE-Advanced (LTE-A) system or an evolution of the LTE-A system.

Furthermore, the network can also include both the UTRAN/E-UTRAN and a core network, wherein the core network includes network entities such as Mobility Management Entity (MME), Serving Gateway (S-GW), Packet Data Network (PDN) Gateway (P-GW), Self-Organizing Networks (SON) server and/or Radio Network Controller (RNC), etc. In other words, after the network receives information transmitted by a communication device, the information may be processed only by the UTRAN/E-UTRAN and decisions corresponding to the information are made at the UTRAN/E-UTRAN. Alternatively, the UTRAN/E-UTRAN may forward the information to the core network, and the decisions corresponding to the information are made at the core network after the core network processes the information. In addition, the information can be processed by both the UTRAN/E-UTRAN and the core network, and the decisions are made after coordination and/or cooperation are performed by the UTRAN/E-UTRAN and the core network.

A communication device can be a user equipment (UE), a low cost device (e.g., machine type communication (MTC) device), a D2D device, a mobile phone, a laptop, a tablet computer, an electronic book, a portable computer system, or combination thereof. In addition, the network and the communication device can be seen as a transmitter or a receiver according to direction (i.e., transmission direction), e.g. , for an uplink (UL), the communication device is the transmitter and the network is the receiver, and for a downlink (DL), the network is the transmitter and the communication device is the receiver.

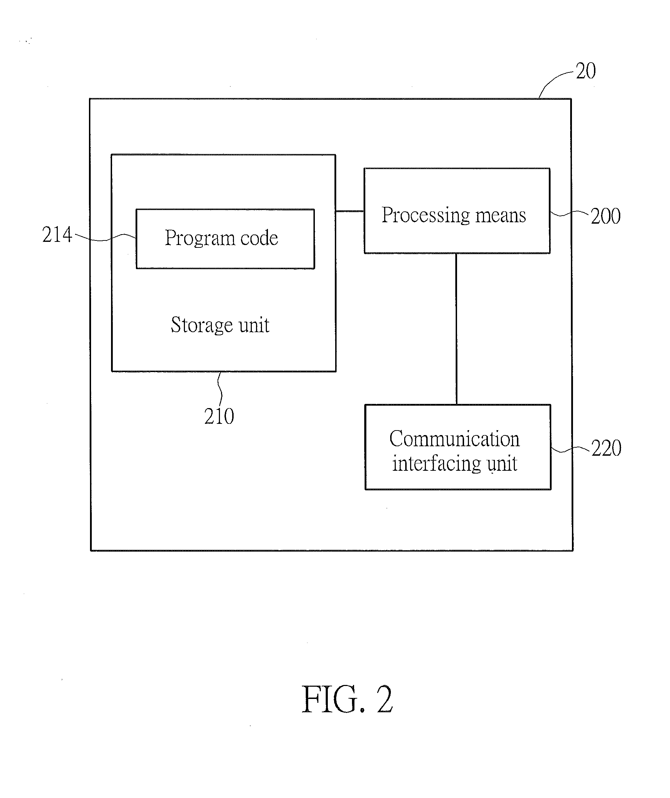

Fig. 2 is a schematic diagram of a communication device 20 according to an example of the present invention. The communication device 20 may be a communication device or the network shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that may store a program code 214, accessed and executed by the processing means 200. Examples of the storage unit 210 include but are not limited to a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage unit, non-transitory computer-readable medium (e.g., tangible media), etc. The communication interfacing unit 220 is preferably a transceiver and is used to transmit and receive signals (e.g., data, signals, messages and/or packets) according to processing results of the processing means 200.

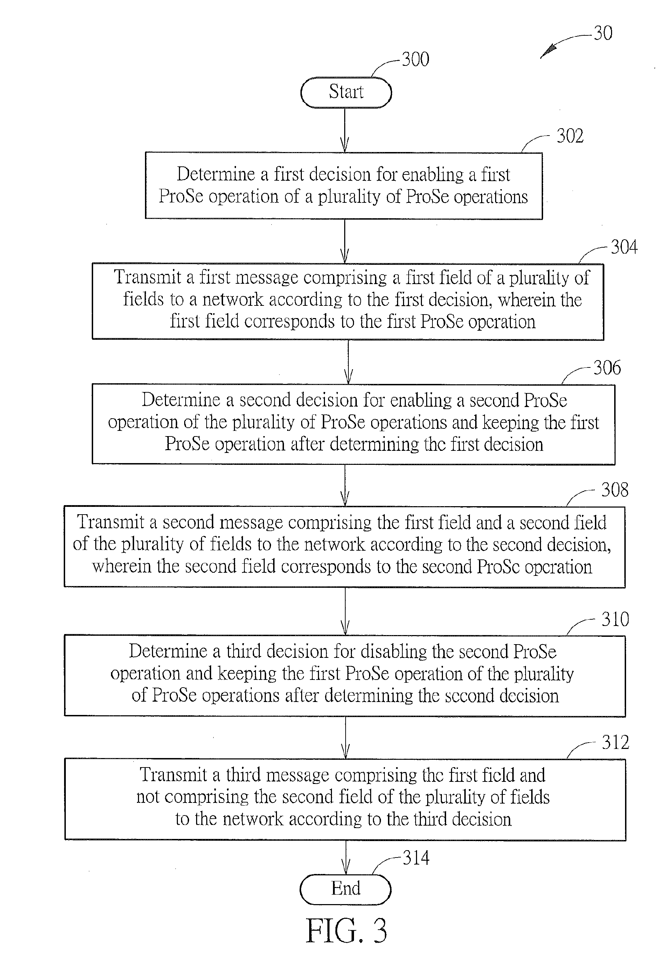

Fig. 3 is a flowchart of process 30 according to an example of the present invention. The process 30 may be utilized in a communication device (e.g., UE) in Fig. 1, to handle Proximity Service (ProSe). The process 30 may be compiled into the program code 214 and includes the following steps:
Step 300: Start.
Step 302: Determine a first decision for enabling a first ProSe operation of a plurality of ProSe operations.
Step 304: Transmit a first message comprising a first field of a plurality of fields to a network according to the first decision, wherein the first field corresponds to the first ProSe operation.
Step 306: Determine a second decision for enabling a second ProSe operation of the plurality of ProSe operations and keeping the first ProSe operation after determining the first decision.
Step 308: Transmit a second message comprising the first field and a second field of the plurality of fields to the network according to the second decision, wherein the second field corresponds to the second ProSe operation.
Step 310: Determine a third decision for disabling the second ProSe operation and keeping the first ProSe operation of the plurality of ProSe operations after determining the second decision.
Step 312: Transmit a third message comprising the first field and not comprising the second field of the plurality of fields to the network according to the third decision.
Step 314: End.

According to the process 30, the communication device may determine a first decision for enabling (e.g., initiating) a first ProSe operation of a plurality of ProSe operations. Then, the communication device may transmit a first message comprising a first field of a plurality of fields to a network (e.g., eNB) according to the first decision, wherein the first field corresponds to the first ProSe operation. That is, the first field is included in the first message to enable the first ProSe operation. Accordingly, the network enables the first ProSe operation after receiving the first message.

The communication device may further determine a second decision for enabling a second ProSe operation of the plurality of ProSe operations and keeping the first ProSe operation after determining the first decision. The communication device may transmit a second message comprising the first field and a second field of the plurality of fields to the network according to the second decision, wherein the second field corresponds to the second ProSe operation. That is, the first field is included in the second message to enable or to keep (e.g., maintain) the first ProSe operation, and the second field is included in the second message to enable the second ProSe operation. The network may select to keep rather than to enable the first ProSe operation, when the network receives the second message comprising the first field and the first ProSe operation is already active. Accordingly, the network keeps the first ProSe operation and enables the second ProSe operation after receiving the second message.

The communication device may further determine a third decision for disabling the second ProSe operation of the plurality of ProSe operations and keeping the first ProSe operation of the plurality of ProSe operations after determining the second decision. The communication device may transmit a third message comprising the first field of the plurality of fields and not comprising the second field of the plurality of fields to the network according to the third decision, wherein the first field corresponds to the first ProSe operation and the second field corresponds to the second ProSe operation. That is, the first field may be included in the third message to keep the first ProSe operation, and the second field may not be included in the third message to disable the second ProSe operation. Accordingly, the network keeps the first ProSe operation and disables the second ProSe operation after receiving the third message.

Realization of the present invention is not limited to the above description. The following example may be applied to the process 30.

The communication device in the process 30 may freely determine to disable one ProSe operation and/or enable or keep another ProSe operation of the plurality of ProSe operations. Accordingly, a message transmitted by the communication device does not include one field corresponding to the ProSe operation that will be disabled, and/or may include another field corresponding to the other ProSe operation that will be enabled or kept, respectively. That is, the field may be included in the message to enable or to keep the corresponding ProSe operation, while the other field may not be included in the message to disable the other corresponding ProSe operation. Therefore, the communication device may keep one ProSe operation while it may disable another ProSe operation; and this can be done in one message.

In one example, the first message, the second message and/or the third message may include a ProSeUEInformation message. That is, any or all of the above messages may be the ProSeUEInformation message. In one example, the plurality of ProSe operations may include a reception of a ProSe direct communication (e. g. , ProSe1), a reception of a ProSe direct discovery (e.g., ProSe2), a request for a dedicated resource for a ProSe direct communication transmission (e. g. , ProSe3), and a request for a dedicated resource for a ProSe direct discovery announcement (e.g., ProSe4). Further, the plurality of fields may include a commInterestedFreq field (e.g., field1) corresponding to the reception of the ProSe direct communication, a discInterestedFreqs field (e.g., field2) corresponding to the reception of the ProSe direct discovery, a commTxResourceReq field (e. g. , field3) corresponding to the request for the dedicated resource for the ProSe direct communication transmission, and a discTxResourceReq field (e.g., field4) corresponding to the request for the dedicated resource for the ProSe direct discovery announcement.

It should be noted that the name of the message of the ProSeUEInformation, or the names of the fields of the commInterestedFreq, the commTxResourceReq, the discInterestedFreqs and the discTxResourceReq may be changed according to the development of the 3GPP standard. For example, the ProSeUEInformation may be replaced by SidelinkUEInformation. The commInterestedFreq and the discInterestedFreqs may be replaced by commRxInterestedFreq and discRxInterest, respectively.

According to the above description, the communication device may transmit the ProSeUEInformation message (e.g., SidelinkUEInformation message) including (or excluding) the commInterestedFreq field (e.g., commRxInterestedFreq field) to the network, when the communication device determines to enable or to keep (or stop) the reception of the ProSe direct communication. The communication device may transmit the ProSeUEInformation message (e.g., SidelinkUEInformation message) including (or excluding) the discInterestedFreqs field (e. g. , discRxInterest field) to the network, when the communication device determines to enable or to keep (or stop) the reception of the ProSe direct discovery. The communication device may transmit the ProSeUEInformation message (e.g., SidelinkUEInformation message) including (or excluding) the commTxResourceReq field to the network, when the communication device determines to enable or to keep (or stop) the request for the dedicated resource for the ProSe direct communication transmission. The communication device may transmit the ProSeUEInformation message (e.g., SidelinkUEInformation message) including (or excluding) the discTxResourceReq field to the network, when the communication device determines to enable or to keep (or stop) the request for the dedicated resource for the ProSe direct discovery announcement.

For example, the communication device may transmit a first ProSeUEInformation message including commTxResourceReq field and discTxResourceReq field to the network, when the communication device determines to enable a request for a dedicated resource for a ProSe direct communication transmission and to keep a request for a dedicated resource for a ProSe direct discovery announcement. The communication device may obtain the dedicated resources for the ProSe direct communication transmission and the ProSe direct discovery announcement, after transmitting the first ProSeUEInformation message to the network. Then, the communication device may transmit a second ProSeUEInformation message including the discTxResourceReq field and excluding the commTxResourceReq field to keep the dedicated resource for the ProSe direct discovery announcement and release the dedicated resource for the ProSe direct communication transmission, respectively, when the communication device does not need the dedicated resource for the ProSe direct communication transmission. The network may only release the dedicated resource for the ProSe direct communication transmission, when the network receives the second ProSeUEInformation message.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

Examples of the hardware may include analog circuit(s),
digital circuit (s) and/or mixed circuit (s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated) . The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, the present invention provides a device and a method for handling ProSe. A communication device may transmit a message including (or excluding) at least one field of a plurality of fields to the network to enable or to keep (or disable) at least one ProSe operation of a plurality of ProSe operations, wherein the at least one field corresponds to the at least one ProSe operation, respectively. Thus, the network can recognize the determination of the communication device correctly after receiving the message.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A communication device for handling Proximity Service (ProSe), comprising:
a storage unit for storing instructions of:
determining a first decision for enabling a first ProSe operation of a plurality of ProSe operations;
transmitting a first message comprising a first field of a plurality of fields to a network according to the first decision, wherein the first field corresponds to the first ProSe operation;
determining a second decision for enabling a second ProSe operation of the plurality of ProSe operations and keeping the first ProSe operation after determining the first decision; and
transmitting a second message comprising the first field and a second field of the plurality of fields to the network according to the second decision, wherein the second field corresponds to the second ProSe operation; and
a processing means, coupled to the storage unit, configured to execute the instructions stored in the storage unit.

2. The communication device of claim 1, wherein the storage unit further stores the instructions of:
determining a third decision for disabling the second ProSe operation and keeping the first ProSe operation of the plurality of ProSe operations after determining the second decision; and
transmitting a third message comprising the first field and not comprising the second field of the plurality of fields to the network according to the third decision.

3. The communication device of claim 2, wherein the first message, the second message and/or the third message comprises a ProSeUEInformation message.

4. The communication device of claim 1, wherein the plurality of ProSe operations comprise a reception of a ProSe direct communication, a reception of a ProSe direct discovery, a request for a dedicated resource for a ProSe direct communication transmission, and a request for a dedicated resource for a ProSe direct discovery announcement.

5. The communication device of claim 1, wherein the plurality of fields comprise a commInterestedFreq field corresponding to a reception of a ProSe direct communication, a discInterestedFreqs field corresponding to a reception of a ProSe direct discovery, a commTxResourceReq field corresponding to a request for a dedicated resource for a ProSe direct communication transmission, and a discTxResourceReq field corresponding to a request for a dedicated resource for a ProSe direct discovery announcement.

6. A method of handling Proximity Service (ProSe) for a communication device, the method comprising:
determining a first decision for enabling a first ProSe operation of a plurality of ProSe operations;
transmitting a first message comprising a first field of a plurality of fields to a network according to the first decision, wherein the first field corresponds to the first ProSe operation;
determining a second decision for enabling a second ProSe operation of the plurality of ProSe operations and keeping the first ProSe operation after determining the first decision; and
transmitting a second message comprising the first field and a second field of the plurality of fields to the network according to the second decision, wherein the second field corresponds to the second ProSe operation.

7. The method of claim 6, further comprising:
determining a third decision for disabling the second ProSe operation and keeping the first ProSe operation of the plurality of ProSe operations after determining the second decision; and
transmitting a third message comprising the first field and not comprising the second field of the plurality of fields to the network according to the third decision.

8. The method of claim 7, wherein the first message, the second message and/or the third message comprises a ProSeUEInformation message.

9. The method of claim 6, wherein the plurality of ProSe operations comprise a reception of a ProSe direct communication, a reception of a ProSe direct discovery, a request for a dedicated resource for a ProSe direct communication transmission, and a request for a dedicated resource for a ProSe direct discovery announcement.

10. The method of claim 6, wherein the plurality of fields comprise a commInterestedFreq field corresponding to a reception of a ProSe direct communication, a discInterestedFreqs field corresponding to a reception of a ProSe direct discovery, a commTxResourceReq field corresponding to a request for a dedicated resource for a ProSe direct communication transmission, and a discTxResourceReq field corresponding to a request for a dedicated resource for a ProSe direct discovery announcement.
